# EUROPEAN PATENT SPECIFICATION

(11) **EP 3 873 995 B1**
(45) Date of publication and mention of the grant of the patent: **27.09.2023**
(21) Application number: 19927042.2
(22) Date of filing: 30.04.2019
(51) Int. Cl.: C09D 11/02, C09D 11/03, C09D 11/106, G03G 9/09, G03G 9/135, C09D 11/037, C09D 11/52, C09D 11/32, C09D 11/107, C09D 11/108, G03G 9/13

(54) **ELECTROPHOTOGRAPHIC INK COMPOSITIONS**
ELEKTROFOTOGRAFISCHE TINTENZUSAMMENSETZUNGEN
COMPOSITIONS D'ENCRE ÉLECTROPHOTOGRAPHIQUE

(43) Date of publication of application: 08.09.2021
(73) Proprietor: Hewlett-Packard Development Company, L.P., Spring TX 77389 (US)
(72) Inventor: AVIGDOR, Reut, Kiryat Weizmann 7403619 Nes Ziona (IL); KOWAL-BLAU, Yael, Kiryat Weizmann 7403662 Nes Ziona (IL); ROSENTHAL, Tal, Kiryat Weizmann 7403662 Nes Ziona (IL); COHEN, Eyal, Kiryat Weizmann 7403662 Nes Ziona (IL); TEISHEV, Albert, Kiryat Weizmann 7403662 Nes Ziona (IL)
(74) Representative: Haseltine Lake Kempner LLP
(86) International application number: PCT/US2019/029883
(87) International publication number: WO 2020/222797

(56) References cited:
- WO-A1-2016/015755
- WO-A1-2016/015757
- US-B2- 9 874 828
- US-B2- 10 197 935

## Description

Electrophotographic printing processes can involve creating an image on a photoconductive surface, applying an ink having charged particles to the photoconductive surface, such that they selectively bind to the image, and then transferring the charged particles in the form of the image to a substrate.

The photoconductive surface may be on a cylinder and may be termed a photo imaging plate (PIP). The photoconductive surface is selectively charged with a latent electrophotographic image having image and background areas with different potentials. For example, an electrophotographic ink composition comprising charged toner particles in a carrier liquid can be brought into contact with the selectively charged photoconductive surface. The charged toner particles adhere to the image areas of the latent image while the background areas remain clean. The image is then transferred to a substrate (e.g. paper or plastic film) directly or, more commonly, by being first transferred to an intermediate transfer member, which can be a soft swelling blanket, and then to the substrate.

### Brief Description of the Figures

Figure 1 is a schematic illustration of an example of a liquid electrophotographic printer for printing a liquid electrophotographic ink composition.
Figure 2 shows SEM images of a reference cyan image on a substrate (left) and the reference cyan ink remaining on the blanket after the T2 transfer.
Figure 3 shows the particle charge of the electrophotographic ink compositions at different concentrations of charge director.

### Detailed Description

Before the present disclosure is disclosed and described, it is to be understood that this is not limited to the particular process steps and materials disclosed herein because such process steps and materials may vary somewhat. It is also to be understood that the terminology used herein is used for the purpose of describing particular embodiments. The terms are not intended to be limiting because the scope is intended to be limited by the appended claims and equivalents thereof.

It is noted that, as used in this specification and the appended claims, the singular forms "a," "an," and "the" include plural referents unless the context clearly dictates otherwise.

As used herein, "carrier fluid", "carrier liquid," "carrier," or "carrier vehicle" refers to the fluid in which pigment particles, resin, charge directors and other additives can be dispersed to form a liquid electrostatic ink composition or liquid electrophotographic ink composition. The carrier liquids may include a mixture of a variety of different agents, such as surfactants, co-solvents, viscosity modifiers, and/or other possible ingredients.

As used herein, "liquid electrostatic ink composition" or "liquid electrophotographic composition" generally refers to an ink composition that is typically suitable for use in an electrostatic printing process, sometimes termed an electrophotographic printing process. It may comprise pigment particles having a thermoplastic resin thereon. The electrostatic ink composition may be a liquid electrostatic ink composition, in which the pigment particles having resin thereon are suspended in a carrier liquid. The pigment particles having resin thereon will typically be charged or capable of developing charge in an electric field, such that they display electrophoretic behaviour. A charge director may be present to impart a charge to the pigment particles having resin thereon.

As used herein, "co-polymer" refers to a polymer that is polymerized from at least two monomers.

As used herein, "melt flow rate" generally refers to the extrusion rate of a resin through an orifice of defined dimensions at a specified temperature and load, usually reported as temperature/load, e.g. 190°C/2.16 kg. Flow rates can be used to differentiate grades or provide a measure of degradation of a material as a result of molding. In the present disclosure, unless otherwise stated, "melt flow rate" is measured per ASTM D1238 Standard Test Method for Melt Flow Rates of Thermoplastics by Extrusion Plastometer, as known in the art. If a melt flow rate of a particular polymer is specified, unless otherwise stated, it is the melt flow rate for that polymer alone, in the absence of any of the other components of the liquid electrostatic ink composition.

As used herein, "acidity," "acid number," or "acid value" refers to the mass of potassium hydroxide (KOH) in milligrams that neutralizes one gram of a substance. The acidity of a polymer can be measured according to standard techniques, for example as described in ASTM D1386. If the acidity of a particular polymer is specified, unless otherwise stated, it is the acidity for that polymer alone, in the absence of any of the other components of the liquid toner composition.

As used herein, "melt viscosity" generally refers to the ratio of shear stress to shear rate at a given shear stress or shear rate. Testing is generally performed using a capillary rheometer. A plastic charge is heated in the rheometer barrel and is forced through a die with a plunger. The plunger is pushed either by a constant force or at constant rate depending on the equipment. Measurements are taken once the system has reached steady-state operation. One method used is measuring Brookfield viscosity @ 140°C, units are mPa·s or cPoise, as known in the art. Alternatively, the melt viscosity can be measured using a rheometer, e.g. a commercially available AR-2000 Rheometer from Thermal Analysis Instruments, using the geometry of: 25mm steel plate-standard steel parallel plate, and finding the plate over plate rheometry isotherm at 120°C, 0.01 Hz shear rate. If the melt viscosity of a particular polymer is specified, unless otherwise stated, it is the melt viscosity for that polymer alone, in the absence of any of the other components of the electrostatic composition.

A certain monomer may be described herein as constituting a certain weight percentage of a polymer. This indicates that the repeating units formed from the said monomer in the polymer constitute said weight percentage of the polymer.

If a standard test is mentioned herein, unless otherwise stated, the version of the test to be referred to is the most recent at the time of filing this patent application.

As used herein, "electrostatic printing" or "electrophotographic printing" generally refers to the process that provides an image that is transferred from a photo imaging substrate either directly or indirectly via an intermediate transfer member to a substrate, such as a paper or plastic substrate. As such, the image is not substantially absorbed into the photo imaging substrate on which it is applied. Additionally, "electrophotographic printers" or "electrostatic printers" generally refer to those printers capable of performing electrophotographic printing or electrostatic printing, as described above. "Liquid electrostatic printing" is a specific type of electrostatic printing in which a liquid composition is employed in the electrophotographic process rather than a powder toner. An electrostatic printing process may involve subjecting the electrostatic composition to an electric field, for example, an electric field having a field gradient of 50-400 V/µm, or more, in some examples, 600-900V/µm, or more.

As used herein, "NVS" is an abbreviation of the term "non-volatile solids".

As used herein, the term "about" is used to provide flexibility to a numerical range endpoint by providing that a given value may be a little above or a little below the endpoint to allow for variation in test methods or apparatus. The degree of flexibility of this term can be dictated by the particular variable and would be within the knowledge of those skilled in the art to determine based on experience and the associated description herein.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary.

Concentrations, amounts, and other numerical data may be expressed or presented herein in a range format. It is to be understood that such a range format is used merely for convenience and brevity and thus should be interpreted flexibly to include not just the numerical values explicitly recited as the limits of the range, but also to include all the individual numerical values or sub-ranges encompassed within that range as if each numerical value and sub-range is explicitly recited. As an illustration, a numerical range of "about 1 wt.% to about 5 wt.%" should be interpreted to include not just the explicitly recited values of about 1 wt.% to about 5 wt.%, but also to include individual values and sub-ranges within the indicated range. Thus, included in this numerical range are individual values such as 2, 3.5, and 4 and sub-ranges such as from 1-3, from 2-4, and from 3-5, etc. This same principle applies to ranges reciting a single numerical value. Furthermore, such an interpretation should apply regardless of the breadth of the range or the characteristics being described.

As used herein, unless otherwise stated, wt.% values are to be taken as referring to a weight-for-weight (w/w) percentage of solids in the ink composition, and not including the weight of any carrier fluid present.

Unless otherwise stated, any feature described herein can be combined with any aspect or any other feature described herein.

The invention is defined by the claims.

In an aspect, there is provided a liquid electrophotographic ink composition. The liquid electrophotographic ink composition may comprise:
a first resin comprising a copolymer of
   an alkylene monomer and
   a methacrylic acid monomer;
a second resin comprising a copolymer of an alkylene monomer and from 5 wt.% to 11 wt.% of an acrylic acid monomer; and
a colorant in an amount of at least 20 wt.% of the solids of the electrophotographic ink composition.

In another aspect, there is provided a printed substrate. The printed substrate may comprise:
a substrate; and
an electrophotographically printed ink composition disposed on the substrate;
wherein the electrophotographically printed ink composition comprises:
   a first resin comprising a copolymer of
      an alkylene monomer and
      a methacrylic acid monomer;
   a second resin comprising a copolymer of an alkylene monomer and from 5 wt.% to 11 wt.% of an acrylic acid monomer and
   a colorant in an amount of at least 20 wt.% of the solids of the electrophotographic ink composition.

In a further aspect, there is provided a method of producing a printed substrate. The method of producing a printed substrate may comprise:
applying a liquid electrophotographic ink composition to a substrate with an electrophotographic printer;
wherein the liquid electrophotographic ink composition comprises:
   a first resin comprising a copolymer of
      an alkylene monomer and
      a methacrylic acid monomer;
   a second resin comprising a copolymer of an alkylene monomer and from 5 wt.% to 11 wt.% of an acrylic acid monomer and
   a colorant in an amount of at least 20 wt.% of the solids of the electrophotographic ink composition.

In order to print thinner layers of liquid electrophotographic ink compositions, the pigment loading (amount of colorant as a proportion of the solids) must be increased. Unfortunately, the transferability of liquid electrophotographic ink compositions from the intermediate transfer member (ITM) blanket to a substrate decreases with increasing pigment loading. As the pigment loading is increased, the ratio between the resin and the pigment is changed, reducing film cohesion and conformability to the substrate, which causes the reduction in transferability of the ink film from the ITM blanket to the substrate.

A combination of a first resin comprising a copolymer of an alkylene monomer and a methacrylic acid monomer and a second resin comprising a copolymer of an alkylene monomer and from about 5 wt.% to about 11 wt.% of an acrylic acid monomer has been found to increase the transferability of liquid electrophotographic ink composition from the intermediate transfer member (ITM) blanket to a substrate even at higher pigment loadings. Furthermore, this combination of resins has also been found to maintain the durability of printed images whilst also improving the charging of the ink composition.

### Liquid electrophotographic ink composition

In an aspect, there is provided a liquid electrophotographic ink composition. The liquid electrophotographic ink composition may comprise: a first resin comprising a copolymer of an alkylene monomer and a methacrylic acid monomer; a second resin comprising a copolymer of an alkylene monomer and from about 5 wt.% to about 11 wt.% of an acrylic acid monomer; and a colorant in an amount of at least 20 wt.% of the solids of the electrophotographic ink composition.

In some examples, the liquid electrophotographic ink composition may comprise a first resin; a second resin; and a colorant in an amount of at least 20 wt.% of the solids of the electrophotographic ink composition.

In some examples, the liquid electrophotographic ink composition may further comprise a charge director.

In some examples, the liquid electrophotographic ink composition may further comprise a charge adjuvant. In some examples, the liquid electrophotographic ink composition may further comprise a charge adjuvant and a charge director.

In some examples, the liquid electrophotographic ink composition may further comprise a carrier liquid. In some examples, the liquid electrophotographic ink composition comprises particles dispersed in the carrier liquid, wherein the particles comprise the first resin and the second resin. In some examples, the liquid electrophotographic ink composition comprises particles dispersed in the carrier liquid, wherein the particles comprise a colorant, the first resin and the second resin.

In some examples, the liquid electrophotographic ink composition may also comprise other additives or a plurality of other additives.

In some examples, the liquid electrophotographic ink composition comprises colorant in an amount of at least about 20 wt.% of the solids of the liquid electrophotographic ink composition, for example, at least 20.5 wt.%, at least 21 wt.%, at least 21.5 wt.%, at least 22 wt.%, at least 22.5 wt.%, at least 23 wt.%, at least 23.5 wt.%, at least 24 wt.%, at least 24.5 wt.%, at least 25 wt.%, at least 25.5 wt.%, at least 26 wt.%, at least 26.5 wt.%, at least 27 wt.%, at least 27.5 wt.%, at least 28 wt.%, at least 28.5 wt.%, at least 29 wt.%, at least 29.5 wt.%, at least 30 wt.%, at least 30.5 wt.%, at least 31 wt.%, at least 31.5 wt.%, at least 32 wt.%, at least 32.5 wt.%, at least 33 wt.%, at least 33.5 wt.%, at least 34 wt.%, at least 34.5 wt.%, or at least 35 wt.% of the solids of the liquid electrophotographic ink composition. In some examples, the liquid electrophotographic ink composition comprises colorant in an amount of about 35 wt.% or less of the solids of the liquid electrophotographic ink composition, for example, 34.5 wt.% or less, 34 wt.% or less, 33.5 wt.% or less, 33 wt.% or less, 32.5 wt.% or less, 32 wt.% or less, 31.5 wt.% or less, 31 wt.% or less, 30.5 wt.% or less, 30 wt.% or less, 29.5 wt.% or less, 29 wt.% or less, 28.5 wt.% or less, 28 wt.% or less, 27.5 wt.% or less, 27 wt.% or less, 26.5 wt.% or less, 26 wt.% or less, 25.5 wt.% or less, 25 wt.% or less, 24.5 wt.% or less, 24 wt.% or less, 23.5 wt.% or less, 23 wt.% or less, 22.5 wt.% or less, 22 wt.% or less, 21.5 wt.% or less, 21 wt.% or less, 20.5 wt.% or less, or 20 wt.% or less of the solids of the liquid electrophotographic ink composition. In some examples, the liquid electrophotographic ink composition comprises colorant in an amount of 20 wt.% to 35 wt.% of the solids of the liquid electrophotographic ink composition, for example, about 20.5 wt.% to about 35 wt.%, 21 wt.% to 34.5 wt.%, 21.5 wt.% to 34 wt.%, 22 wt.% to 33.5 wt.%, 22.5 wt.% to 33 wt.%, 23 wt.% to 32.5 wt.%, 23.5 wt.% to 32 wt.%, 24 wt.% to 31.5 wt.%, 24.5 wt.% to 31 wt.%, 25 wt.% to 30.5 wt.%, 25.5 wt.% to 30 wt.%, 26 wt.% to 29.5 wt.%, 26.5 wt.% to 29 wt.%, 27 wt.% to 28.5 wt.%, or 27.5 wt.% to 28 wt.% of the solids of the liquid electrophotographic ink composition.

In some examples, the solids of the liquid electrophotographic ink composition comprise at least 60 wt.% total resin, wherein the total resin comprises the first resin and the second resin. In some example, the solids of the liquid electrophotographic ink composition comprises at least 65 wt.%, at least 70 wt.%, at least 75 wt.%, or about 80 wt.% total resin. In some examples, the solids of the liquid electrophotographic ink composition comprises 80 wt.% or less total resin, 75 wt.% or less, 70 wt.% or less, 65 wt.% or less, or 60 wt.% or less total resin. In some examples, the solids of the liquid electrophotographic ink composition comprises from about 60 wt.% to about 80 wt.% total resin, for example, from about 65 wt.% to about 75 wt.%, or from about 70 wt.% to about 80 wt.% total resin.

In some examples, the resin in the liquid electrophotographic ink composition comprises the first resin and the second resin. In some examples, the resin in the liquid electrophotographic ink composition consists of the first resin and the second resin.

In some examples, the ratio of the first resin to the second resin is from about 75:25 to about 50:50. In some examples, the ratio of the first resin to the second resin is from about 70:30 to about 55:45, for example, from 65:35 to about 60:40.

### First resin

In some examples, the first resin comprises a copolymer of an alkylene monomer and a methacrylic acid monomer. In some examples, the first resin consists of a copolymer of an alkylene monomer and a methacrylic acid monomer.

In some examples, the alkylene monomer is a C2 to C12 alkylene monomer, in some examples, a C2 to C5 alkylene monomer. In some examples, the alkylene monomer is selected form ethylene and propylene. In some examples, the alkylene monomer is ethylene.

In some examples, the first resin comprises a copolymer of a monomer selected from ethylene and propylene and a methacrylic acid monomer. In some examples, the first resin comprises a copolymer of ethylene and a methacrylic acid monomer.

In some examples, the first resin comprises a copolymer of an alkylene monomer and about 5 wt.% or more of a methacrylic acid monomer, for example, about 6 wt.% or more, about 7 wt.% or more, about 8 wt.% or more, about 9 wt.% or more, about 10 wt.% or more, about 11 wt.% or more, about 12 wt.% or more, about 13 wt.% or more, about 14 wt.% or more, or about 15 wt.% or more of a methacrylic acid monomer. In some examples, the first resin comprises a copolymer of an alkylene monomer and about 15 wt.% or less of a methacrylic acid monomer, for example, about 14 wt.% or less, about 13 wt.% or less, about 12 wt.% or less, about 11 wt.% or less, about 10 wt.% or less, about 9 wt.% or less, about 8 wt.% or less, about 7 wt.% or less, about 6 wt.% or less, or about 5 wt.% or less of a methacrylic acid monomer.

In some examples, the first resin comprises a copolymer of an alkylene monomer, for example, ethylene, and from about 5 wt.% to about 15 wt.% of a methacrylic acid monomer, for example, from about 6 wt.% to about 14 wt.%, from about 7 wt.% to about 14 wt.%, from about 8 wt.% to about 13 wt.%, from about 9 wt.% to about 13 wt.%, from about 10 wt.% to about 12 wt.%, or from about 11 wt.% to about 12 wt.% of a methacrylic acid monomer.

In some examples, the first resin comprises a copolymer of ethylene and 11 wt.% methacrylic acid.

In some examples, the proportion of methacrylic acid in the first resin is comparable to the proportion of acrylic acid in the second resin. In some examples, the amount of methacrylic acid in the copolymer of an alkylene monomer and a methacrylic acid monomer is within 2 wt.% of the amount of acrylic acid in the copolymer of an alkylene monomer and an acrylic acid monomer. In some examples, the amount of methacrylic acid in the copolymer of an alkylene monomer and a methacrylic acid monomer is within 1.5 wt.% of the amount of acrylic acid in the copolymer of an alkylene monomer and an acrylic acid monomer. In some examples, the amount of methacrylic acid in the copolymer of an alkylene monomer and a methacrylic acid monomer is within 1 wt.% of the amount of acrylic acid in the copolymer of an alkylene monomer and an acrylic acid monomer.

In some examples, the first resin has an acidity that is comparable to the acidity of the second resin. In some examples, the first resin may have an acidity that is within 20 mg KOH/g of the acidity of the second resin, for example, within 15 mg KOH/g or within 10 mg KOH/g of the acidity of the second resin.

In some examples, the first resin has a melt flow rate of 120 g/10 min or less, for example, 110 g/10 min or less, 105 g/10 min or less, 100 g/10 min or less, 95 g/10 min or less, 90 g/10 min or less, 85 g/10 min or less, 80 g/10 min or less, 75 g/10 min or less, 70 g/10 min or less, 65 g/10 min or less, 60 g/10 min or less, 55 g/10 min or less, 50 g/10 min or less, 45 g/10 min or less, 40 g/10 min or less, 35 g/10 min or less, 30 g/10 min or less, 25 g/10 min or less, 20 g/10 min or less, 15 g/10 min or less, or 10 g/10 min or less. In some examples, the first resin has a melt flow rate of 10 g/10 min or more, for example, 15 g/10 min or more, 20 g/10 min or more, 25 g/10 min or more, 30 g/10 min or more, 35 g/10 min or more, 40 g/10 min or more, 45 g/10 min or more, 50 g/10 min or more, 55 g/10 min or more, 60 g/10 min or more, 65 g/10 min or more, 70 g/10 min or more, 75 g/10 min or more, 80 g/10 min or more, 85 g/10 min or more, 90 g/10 min or more, 95 g/10 min or more, 100 g/10 min or more, 105 g/10 min or more, 110 g/10 min or more, 115 g/10 min or more, or 120 g/10 min or more. In some examples, the first resin has a melt flow rate of from about 5 g/10 min to 120 g/10 min, 10 g/10 min to 120 g/10 min, 15 g/10 min to 115 g/10 min, 20 g/10 min to 115 g/10 min, 25 g/10 min to 110 g/10 min, 30 g/10 min to 110 g/10 min, 35 g/10 min to 100 g/10 min, 40 g/10 min to 100 g/10 min, 45 g/10 min to 95 g/10 min, 50 g/10 min to 120 g/10 min, 55 g/10 min to 115 g/10 min, 60 g/10 min to 110 g/10 min, 65 g/10 min to 120 g/10 min, 70 g/10 min to 115 g/10 min, 75 g/10 min to 100 g/10 min, 80 g/10 min to 95 g/10 min, 85 g/10 min to 95 g/10 min, or 90 g/10 min to 95 g/10 min. The melt flow rate can be measured by using ASTM D1238 or ISO 1133 at a temperature of 190°C and using 2.16 kg.

In some examples, the solids of the liquid electrophotographic ink composition comprises at least 30 wt.% first resin, for example, at least 31 wt.%, at least 32 wt.%, at least 33 wt.%, at least 34 wt.%, at least 35 wt.%, at least 36 wt.%, at least 37 wt.%, at least 38 wt.%, at least 39 wt.%, at least 40 wt.%, at least 41 wt.%, at least 42 wt.%, at least 43 wt.%, at least 44 wt.%, at least 45 wt.%, at least 50 wt.%, at least 55 wt.%, or at least 60 wt.% first resin. In some examples, the solids of the liquid electrophotographic ink composition comprises 60 wt.% or less first resin, for example, 55 wt.% or less, 50 wt.% or less, 45 wt.% or less, 44 wt.% or less, 43 wt.% or less, 42 wt.% or less, 41 wt.% or less, 40 wt.% or less, 39 wt.% or less, 38 wt.% or less, 37 wt.% or less, 36 wt.% or less, 35 wt.% or less, 34 wt.% or less, 33 wt.% or less, 32 wt.% or less, 31 wt.% or less, or 30 wt.% or less first resin. In some examples, the solids of the liquid electrophotographic ink composition comprises from about 30 wt.% to about 60 wt.% first resin, for example, from about 31 wt.% to about 55 wt.%, from about 32 wt.% to about 50 wt.%, from about 33 wt.% to about 45 wt.%, from about 34 wt.% to about 44 wt.%, from about 35 wt.% to about 43 wt.%, from about 36 wt.% to about 42 wt.%, from about 37 wt.% to about 41 wt.%, from about 38 wt.% to about 40 wt.%, or from about 39 wt.% to about 60 wt.% first resin.

Examples of suitable resins include the Nucrel^{™} resins 699, 599, 925, 960 and 2806.

### Second resin

In some examples, the second resin comprises a copolymer of an alkylene monomer and from about 5 wt.% to about 11 wt.% of an acrylic acid monomer. In some examples, the second resin consists of a copolymer of an alkylene monomer and from about 5 wt.% to about 11 wt.% of an acrylic acid monomer.

In some examples, the alkylene monomer is a C2 to C12 alkylene monomer, in some examples, a C2 to C5 alkylene monomer. In some examples, the alkylene monomer is selected form ethylene and propylene. In some examples, the alkylene monomer is ethylene.

In some examples, the second resin comprises a copolymer of a monomer selected from ethylene and propylene and from about 5 wt.% to about 11 wt.% of an acrylic acid monomer. In some examples, the second resin comprises a copolymer of ethylene and from about 5 wt.% to about 11 wt.% of an acrylic acid monomer.

In some examples, the second resin comprises a copolymer of an alkylene monomer and about 5 wt.% or more of an acrylic acid monomer, for example, about 6 wt.% or more, about 7 wt.% or more, about 8 wt.% or more, about 9 wt.% or more, about 10 wt.% or more, about 11 wt.% of an acrylic acid monomer. In some examples, the second comprises a copolymer of an alkylene monomer and about 11 wt.% or less of an acrylic acid monomer, for example, about 10 wt.% or less, about 9 wt.% or less, about 8 wt.% or less, about 7 wt.% or less, about 6 wt.% or less, or about 5 wt.% of an acrylic acid monomer.

In some examples, the second resin comprises a copolymer of an alkylene monomer, for example, ethylene, and from about 5 wt.% to about 11 wt.% of an acrylic acid monomer, for example, from about 6 wt.% to about 10 wt.%, from about 7 wt.% to about 11 wt.%, from about 8 wt.% to about 11 wt.%, from about 9 wt.% to about 10 wt.% of an acrylic acid monomer.

In some examples, the second resin comprises a copolymer of ethylene and 10 wt.% acrylic acid.

In some examples, the second resin has an acidity of 100 mg KOH/g or less, for example, 95 mg KOH/g or less, 90 mg KOH/g or less, 85 mg KOH/g or less, 80 mg KOH/g or less, or 75 mg KOH/g or less. In some examples, the second resin has an acidity of 50 mg KOH/g or more, 55 mg KOH/g or more, 60 mg KOH/g or more, 65 mg KOH/g or more, 70 mg KOH/g or more, or 75 mg KOH/g or more. In some examples, the second resin has an acidity of from about 50 mg KOH/g to about 100 mg KOH/g, from about 55 mg KOH/g to about 95 mg KOH/g, from about 60 mg KOH/g to about 90 mg KOH/g, from about 65 mg KOH/g to about 85 mg KOH/g, from about 70 mg KOH/g to about 80 mg KOH/g, or from about 70 mg KOH/g to about 75 mg KOH/g.

In some examples, the second resin has a melt viscosity of 15000 poise or less, in some examples, 10000 poise or less, in some examples, 1000 poise or less, in some examples, 100 poise or less, in some examples, 50 poise or less, in some examples 10 poise or less. The melt viscosity can be measured using a rheometer, e.g., a commercially available AR-2000 Rheometer from Thermal Analysis Instruments, using the geometry of: 25 mm steel plate-standard steel parallel plate, and finding the plate over plate rheometry isotherm at 120°C, 0.01 Hz shear rate. In some examples, the viscosity at 140°C is 1000 centipoise (cP) or less, in some examples, 950 cP or less, 900 cP or less, 875 cP or less, in some examples, 850 cP or less, in some examples, 825 cP or less, in some examples, 800 cP or less, in some examples, 750 cP or less, in some examples, 700 cP or less, in some examples, 650 cP. In some examples, the viscosity at 140°C is 300 cP or more, in some examples, 400 cP or more, in some examples, 450 cP or more, in some examples, 500 cP or more, in some examples, 550 cP or more, in some examples, 600 cP or more, in some examples, 650 cP or more, in some examples, 700 cP or more, in some example, 750 cP or more, in some examples, 800 cP or more, in some examples, 825 cP or more. In some examples, the viscosity at 140°C is 300 cP to 1000 cP, in some examples, 300 cP to 950 cP, in some examples, 400 cP to 900 cP, in some examples, 450 cP to 875 cP, in some examples, 550 cP to 850 cP, in some examples, 650 cP to 825 cP, in some examples, 700 cP to 900 cP, in some examples, 750 cP to 850 cP, in some examples, 800 cP to 825 cP.

In some examples, the solids of the liquid electrophotographic ink composition comprises at least 15 wt.% second resin, for example, at least 16 wt.%, at least 17 wt.%, at least 18 wt.%, at least 19 wt.%, at least 20 wt.%, at least 21 wt.%, at least 22 wt.%, at least 23 wt.%, at least 24 wt.%, at least 25 wt.%, at least 26 wt.%, at least 27 wt.%, at least 28 wt.%, at least 29 wt.%, at least 30 wt.%, at least 35 wt.%, or at least 40 wt.% second resin. In some examples, the solids of the liquid electrophotographic ink composition comprises 40 wt.% or less second resin, for example, 35 wt.% or less, 30 wt.% or less, 29 wt.% or less, 28 wt.% or less, 27 wt.% or less, 26 wt.% or less, 25 wt.% or less, 24 wt.% or less, 23 wt.% or less, 22 wt.% or less, 21 wt.% or less, 20 wt.% or less, 19 wt.% or less, 18 wt.% or less, 17 wt.% or less, 16 wt.% or less, or 15 wt.% or less second resin. In some examples, the solids of the liquid electrophotographic ink composition comprises from about 15 wt.% to about 40 wt.% second resin, for example, from about 16 wt.% to about 35 wt.%, from about 17 wt.% to about 30 wt.%, from about 16 wt.% to about 29 wt.%, from about 17 wt.% to about 28 wt.%, from about 18 wt.% to about 27 wt.%, from about 19 wt.% to about 26 wt.%, from about 20 wt.% to about 25 wt.%, from about 21 wt.% to about 24 wt.%, or from about 22 wt.% to about 23 wt.% second resin.

An example of the second resin is A-C^{™} 580 or A-C^{™} 540.

### Colorant

The electrophotographic ink composition may include a colorant. In some examples, the colorant may be a dye or pigment.

As used herein, "colorant" may be a material that imparts a colour to the ink composition. As used herein, "colorant" includes pigments and dyes, such as those that impart colours, such as black, magenta, cyan, yellow and white to an ink. As used herein, "pigment" generally includes pigment colorants, magnetic particles, aluminas, silicas, and/or other ceramics or organometallics. Thus, though the present description primarily exemplifies the use of pigment colorants, the term "pigment" can be used more generally to describe not only pigment colorants, but also other pigments such as organometallics, ferrites, ceramics, and so forth.

In some examples, the colorant is selected from cyan colorants, magenta colorants, and yellow colorants. In some examples, the colorant is selected from cyan pigments, magenta pigments and yellow pigments.

The colorant can be any colorant compatible with the carrier liquid and useful for electrophotographic printing. For example, the colorant may be present as pigment particles, or may comprise a resin as described herein and a pigment. The pigments can be any of those standardly used in the art. In some examples, the colorant is selected from a cyan pigment, a magenta pigment, a yellow pigment and a black pigment. For example, pigments by Hoechst including Permanent Yellow DHG, Permanent Yellow GR, Permanent Yellow G, Permanent Yellow NCG-71, Permanent Yellow GG, Hansa Yellow RA, Hansa Brilliant Yellow 5GX-02, Hansa Yellow X, NOVAPERM^{®} YELLOW HR, NOVAPERM^{®} YELLOW FGL, Hansa Brilliant Yellow 10GX, Permanent Yellow G3R-01, HOSTAPERM^{®} YELLOW H4G, HOSTAPERM^{®} YELLOW H3G, HOSTAPERM^{®} ORANGE GR, HOSTAPERM^{®} SCARLET GO, Permanent Rubine F6B; pigments by Sun Chemical including L74-1357 Yellow, L75-1331 Yellow, L75-2337 Yellow; pigments by Heubach including DALAMAR^{®} YELLOW YT-858-D; pigments by Ciba-Geigy including CROMOPHTHAL^{®} YELLOW 3 G, CROMOPHTHAL^{®} YELLOW GR, CROMOPHTHAL^{®} YELLOW 8 G, IRGAZINE^{®} YELLOW 5GT, IRGALITE^{®} RUBINE 4BL, MONASTRAL^{®} MAGENTA, MONASTRAL^{®} SCARLET, MONASTRAL^{®} VIOLET, MONASTRAL^{®} RED, MONASTRAL^{®} VIOLET; pigments by BASF including LUMOGEN^{®} LIGHT YELLOW, PALIOGEN^{®} ORANGE, HELIOGEN^{®} BLUE L 690 IF, HELIOGEN^{®} BLUE TBD 7010, HELIOGEN^{®} BLUE K 7090, HELIOGEN^{®} BLUE L 710 IF, HELIOGEN^{®} BLUE L 6470, HELIOGEN^{®} GREEN K 8683, HELIOGEN^{®} GREEN L 9140; pigments by Mobay including QUINDO^{®} MAGENTA, INDOFAST^{®} BRILLIANT SCARLET, QUINDO^{®} RED 6700, QUINDO^{®} RED 6713, INDOFAST^{®} VIOLET; pigments by Cabot including Maroon B STERLING^{®} NS BLACK, STERLING^{®} NSX 76, MOGUL^{®} L; pigments by DuPont including TIPURE^{®} R-101; and pigments by Paul Uhlich including UHLICH^{®} BK 8200. If the pigment is a white pigment particle, the pigment particle may be selected from the group consisting of TiO₂, calcium carbonate, zinc oxide, and mixtures thereof. In some examples, the white pigment particle may comprise an alumina-TiO₂ pigment.

### Carrier Liquid

In some examples, the electrophotographic ink composition comprises a carrier liquid.

The carrier liquid can include or be a hydrocarbon, silicone oil, vegetable oil, etc. The carrier liquid can include, for example, an insulating, non-polar, non-aqueous liquid that can be used as a medium for ink particles, i.e., the ink particles comprising the first resin, the second resin and the colorant. The carrier liquid can include compounds that have a resistivity in excess of about 10⁹ ohm·cm. The carrier liquid may have a dielectric constant below about 5, in some examples, below about 3. The carrier liquid can include hydrocarbons. The hydrocarbon can include, for example, an aliphatic hydrocarbon, an isomerized aliphatic hydrocarbon, branched chain aliphatic hydrocarbons, aromatic hydrocarbons, and combinations thereof. Examples of the carrier liquid include, for example, aliphatic hydrocarbons, isoparaffinic compounds, paraffinic compounds, dearomatized hydrocarbon compounds, and the like. In particular, the carrier liquid can include, for example, Isopar-G^{™}, Isopar-H^{™}, Isopar-L^{™}, Isopar-M^{™}, Isopar-K^{™}, Isopar-V^{™}, Norpar 12^{™}, Norpar 13^{™}, Norpar 15^{™}, Exxol D40^{™}, Exxol D80^{™}, Exxol D100^{™}, Exxol D130^{™}, and Exxol 0140^{™} (each sold by EXXON CORPORATION); Teclen N-16^{™}, Teclen N-20^{™}, Teclen N-22^{™}, Nisseki Naphthesol L^{™}, Nisseki Naphthesol M^{™}, Nisseki Naphthesol H^{™}, #0 Solvent L^{™}, #0 Solvent M^{™}, #0 Solvent H^{™}, Nisseki Isosol 300^{™}, Nisseki Isosol 400^{™}, AF-4^{™}, AF-5^{™}, AF-6^{™} and AF-7^{™} (each sold by NIPPON OIL CORPORATION); IP Solvent 1620^{™} and IP Solvent 2028^{™} (each sold by IDEMITSU PETROCHEMICAL CO., LTD.); Amsco OMS^{™} and Amsco 460^{™} (each sold by AMERICAN MINERAL SPIRITS CORP.); and Electron, Positron, New II, Purogen HF (100% synthetic terpenes) (sold by ECOLINK^{™}).

The carrier liquid can constitute about 20% to 99.5% by weight of the liquid electrophotographic ink composition, in some examples, 50% to 99.5% by weight of the liquid electrophotographic ink composition. The carrier liquid may constitute about 40 to 90 % by weight of the liquid electrophotographic ink composition. The carrier liquid may constitute about 60% to 80% by weight of the liquid electrophotographic ink composition. The carrier liquid may constitute about 90% to 99.5% by weight of the liquid electrophotographic ink composition, in some examples, 95% to 99% by weight of the liquid electrophotographic ink composition.

The liquid electrophotographic ink composition, when printed on a substrate, for example, a paper or plastic substrate, may be substantially free from carrier liquid. In a liquid electrophotographic printing process and/or afterwards, the carrier liquid may be removed, for example, by an electrophoresis processes during printing and/or evaporation, such that substantially just solids are transferred to the substrate. Substantially free from carrier liquid may indicate that the ink printed on the substrate contains less than 5 wt.% carrier liquid, in some examples, less than 2 wt.% carrier liquid, in some examples, less than 1 wt.% carrier liquid, in some examples, less than 0.5 wt.% carrier liquid. In some examples, the ink printed on the substrate is free from carrier liquid.

### Charge Adjuvant

In some examples, the liquid electrophotographic ink composition includes a charge adjuvant. A charge adjuvant may promote charging of the particles when a charge director is present. The method of producing an electrophotographic ink composition, as described herein, may involve adding a charge adjuvant at any stage. The charge adjuvant can include, for example, barium petronate, calcium petronate, Co salts of naphthenic acid, Ca salts of naphthenic acid, Cu salts of naphthenic acid, Mn salts of naphthenic acid, Ni salts of naphthenic acid, Zn salts of naphthenic acid, Fe salts of naphthenic acid, Ba salts of stearic acid, Co salts of stearic acid, Pb salts of stearic acid, Zn salts of stearic acid, Al salts of stearic acid, Zn salts of stearic acid, Cu salts of stearic acid, Pb salts of stearic acid, Fe salts of stearic acid, metal carboxylates (e.g., Al tristearate, Al octanoate, Li heptanoate, Fe stearate, Fe distearate, Ba stearate, Cr stearate, Mg octanoate, Ca stearate, Fe naphthenate, Zn naphthenate, Mn heptanoate, Zn heptanoate, Ba octanoate, Al octanoate, Co octanoate, Mn octanoate, and Zn octanoate), Co lineolates, Mn lineolates, Pb lineolates, Zn lineolates, Ca oleates, Co oleates, Zn palmirate, Ca resinates, Co resinates, Mn resinates, Pb resinates, Zn resinates, AB diblock copolymers of 2-ethylhexyl methacrylate-co-methacrylic acid calcium and ammonium salts, copolymers of an alkyl acrylamidoglycolate alkyl ether (e.g., methyl acrylamidoglycolate methyl ether-co-vinyl acetate), and hydroxy bis(3,5-di-tert-butyl salicylic) aluminate monohydrate. In an example, the charge adjuvant is or includes aluminium di- or tristearate. In some examples, the charge adjuvant is VCA (an aluminium stearate, available from Fischer Scientific).

In some examples, the electrophotographic ink composition further includes a salt of a multivalent cation and a fatty acid anion. The salt of a multivalent cation and a fatty acid anion can act as a charge adjuvant. The multivalent cation may, in some examples, be a divalent or a trivalent cation. In some examples, the multivalent cation is selected from Group 2, transition metals, Group 3 and Group 4 in the Periodic Table. In some examples, the multivalent cation includes a metal selected from Ca, Sc, Ti, V, Cr, Mn, Fe, Co, Ni, Cu, Zn, Al and Pb. In some examples, the multivalent cation is Al³⁺. The fatty acid anion may be selected from a saturated or unsaturated fatty acid anion. The fatty acid anion may be a C₈ to C₂₆ fatty acid anion, in some examples, a C₁₄ to C₂₂ fatty acid anion, in some examples, a C₁₆ to C₂₀ fatty acid anion, in some examples, a C₁₇, C₁₈ or C₁₉ fatty acid anion. In some examples, the fatty acid anion is selected from a caprylic acid anion, capric acid anion, lauric acid anion, myristic acid anion, palmitic acid anion, stearic acid anion, arachidic acid anion, behenic acid anion and cerotic acid anion.

The charge adjuvant may be present in an amount of about 0.1% to about 5% by weight, in some examples, about 0.1% to about 1% by weight, in some examples, about 0.3% to about 0.8% by weight of the solids of the electrophotographic ink composition, in some examples, about 1 wt.% to about 3 wt.% of the solids of the electrophotographic ink composition, in some examples, about 1.5 wt.% to about 2.5 wt.% of the solids of the electrophotographic ink composition.

The charge adjuvant may be present in an amount of about 5.0% by weight or less of total solids of the electrophotographic ink composition, in some examples, in an amount of about 4.5% by weight or less, in some examples, in an amount of about 4.0% by weight or less, in some examples, in an amount of about 3.5% by weight or less, in some examples, in an amount of about 3.0% by weight or less, in some examples, in an amount of about 2.5% by weight or less, in some examples, about 2.0% or less by weight of the solids of the electrophotographic ink composition.

The charge adjuvant, which may, for example, be or include a salt of a multivalent cation and a fatty acid anion, may be present in an amount of about 0.1 wt.% to about 5 wt.% of the solids of the electrophotographic ink composition, in some examples, in an amount of about 0.1 wt.% to about 2 wt.% of the solids of the electrophotographic ink composition, in some examples, in an amount of about 0.3 wt.% to about 1.5 wt.% of the solids of the electrophotographic ink composition, in some examples, about 0.5 wt.% to about 1.2 wt.% of the solids of the electrophotographic ink composition, in some examples, about 0.8 wt.% to about 1 wt.% of the solids of the electrophotographic ink composition, in some examples, about 1 wt.% to about 3 wt.% of the solids of the electrophotographic ink composition, in some examples, about 1.5 wt.% to about 2.5 wt.% of the solids of the electrophotographic ink composition.

### Charge Director

In some examples, the liquid electrophotographic ink composition includes a charge director. The charge director may be added to the liquid electrophotographic ink composition in order to impart and/or maintain sufficient electrophotographic charge on the resin particles. In some examples, the charge director may comprise ionic compounds, particularly metal salts of fatty acids, metal salts of sulfosuccinates, metal salts of oxyphosphates, metal salts of alkyl-benzenesulfonic acid, metal salts of aromatic carboxylic acids or sulfonic acids, as well as zwitterionic and non-ionic compounds, such as polyoxyethylated alkylamines, lecithin, polyvinylpyrrolidone, organic acid esters of polyvalent alcohols, etc. The charge director can be selected from, but is not limited to, oil-soluble petroleum sulfonates (e.g., neutral Calcium Petronate^{™}, neutral Barium Petronate^{™}, and basic Barium Petronate^{™}), polybutylene succinimides (e.g. OLOA^{™} 1200 and Amoco 575), and glyceride salts (e.g., sodium salts of phosphated mono- and diglycerides with unsaturated and saturated acid substituents), sulfonic acid salts including, but not limited to, barium, sodium, calcium, and aluminium salts of sulfonic acid. The sulfonic acids may include, but are not limited to, alkyl sulfonic acids, aryl sulfonic acids, and sulfonic acids of alkyl succinates. The charge director can impart a negative charge or a positive charge on the resin-containing particles of a liquid electrophotographic ink composition.

The charge director may be added in order to impart and/or maintain sufficient electrophotographic charge on the ink particles, which may be particles comprising the first resin and the second resin. The charge director may be added in order to impart and/or maintain sufficient electrophotographic charge on the ink particles, which may be particles comprising the first resin, the second resin and the colorant.

In some examples, the liquid electrophotographic ink composition comprises a charge director comprising a simple salt. The ions constructing the simple salts are all hydrophilic. The simple salt may include a cation selected from the group consisting of Mg, Ca, Ba, NH₄, *tert*-butyl ammonium, Li⁺, and Al³⁺, or from any sub-group thereof. The simple salt may include an anion selected from the group consisting of SO₄²⁻, PO³⁻, NO³⁻, HPO₄²⁻, CO₃²⁻, acetate, trifluoroacetate (TFA), Cl⁻, BF₄⁻, F⁻, ClO₄⁻, and TiO₃⁴⁻ or from any sub-group thereof. The simple salt may be selected from CaCO₃, Ba₂TiO₃, Al₂(SO₄), Al(NO₃)₃, Ca₃(PO₄)₂, BaSO₄, BaHPO₄, Ba₂(PO₄)₃, CaSO₄, (NH₄)₂CO₃, (NH₄)₂SO₄, NH₄OAc, *tert*-butyl ammonium bromide, NH₄NO₃, LiTFA, Al₂(SO₄)₃, LiClO₄ and LiBF₄, or any sub-group thereof.

In some examples, the liquid electrophotographic ink composition comprises a charge director comprising a sulfosuccinate salt of the general formula MAₙ, wherein M is a metal, n is the valence of M, and A is an ion of the general formula (I): [R'-O-C(O)CH₂CH(SO₃⁻)C(O)-O-R²], wherein each of R¹ and R² is an alkyl group. In some examples, each of R¹ and R² is an aliphatic alkyl group. In some examples, each of R¹ and R² independently is a C6-25 alkyl. In some examples, said aliphatic alkyl group is linear. In some examples, said aliphatic alkyl group is branched. In some examples, said aliphatic alkyl group includes a linear chain of more than 6 carbon atoms. In some examples, R¹ and R² are the same. In some examples, at least one of R¹ and R² is C₁₃H₂₇. In some examples, M is Na, K, Cs, Ca, or Ba.

In some examples, the charge director comprises at least one micelle forming salt and nanoparticles of a simple salt as described above. The simple salts are salts that do not form micelles by themselves, although they may form a core for micelles with a micelle forming salt. The sulfosuccinate salt of the general formula MAₙ is an example of a micelle forming salt. The charge director may be substantially free of an acid of the general formula HA, where A is as described above. The charge director may include micelles of said sulfosuccinate salt enclosing at least some of the nanoparticles of the simple salt. The charge director may include at least some nanoparticles of the simple salt having a size of 200 nm or less, and/or in some examples, 2 nm or more.

The charge director may include one of, some of or all of (i) soya lecithin, (ii) a barium sulfonate salt, such as basic barium petronate (BPP), and (iii) an isopropyl amine sulfonate salt. Basic barium petronate is a barium sulfonate salt of a C21-26 hydrocarbon alkyl, and can be obtained, for example, from Chemtura. An example isopropyl amine sulfonate salt is dodecyl benzene sulfonic acid isopropyl amine, which is available from Croda.

In some examples, the charge director constitutes about 0.001% to about 20%, in some examples, about 0.01% to about 20% by weight, in some examples, about 0.01 to about 10% by weight, in some examples, about 0.01% to about 1% by weight of the solids of a liquid electrophotographic ink composition. In some examples, the charge director constitutes about 0.001% to about 0.15% by weight of the solids of the liquid electrophotographic ink composition, in some examples, about 0.001% to about 0.15%, in some examples, about 0.001% to about 0.02% by weight of the solids of a liquid electrophotographic ink composition, in some examples, about 0.1% to about 2% by weight of the solids of the liquid electrophotographic ink composition, in some examples, about 0.2% to about 1.5% by weight of the solids of the liquid electrophotographic ink composition, in some examples, about 0.1% to about 1% by weight of the solids of the liquid electrophotographic ink composition, in some examples, about 0.2% to about 0.8% by weight of the solids of the liquid electrophotographic ink composition.

In some examples, the charge director is present in an amount of from about 3 mg/g to about 80 mg/g, in some examples, 3 mg/g to about 50 mg/g, in some examples, 3 mg/g to about 20 mg/g, in some examples, from about 3 mg/g to about 15 mg/g, in some examples, from about 10 mg/g to about 15 mg/g, in some examples, from about 5 mg/g to about 10 mg/g (where mg/g indicates mg per gram of solids of the liquid electrophotographic ink composition).

### Other additives

The liquid electrophotographic ink composition may include other additives or a plurality of other additives. The other additive or plurality of other additives may be added at any stage of the method of producing an electrophotographic ink composition. The other additive or plurality of other additives may be selected from a charge adjuvant, a wax, a surfactant, viscosity modifiers, and compatibility additives. The wax may be an incompatible wax. As used herein, "incompatible wax" may refer to a wax that is incompatible with the resin. Specifically, the wax phase separates from the resin phase upon cooling of the resin fused mixture on a substrate during and after the transfer of the ink film to the substrate, for example, from an intermediate transfer member, which may be a heated blanket.

### Printed Substrate

In an aspect, there is provided a printed substrate. The printed substrate may comprise: a substrate; and an electrophotographically printed ink composition disposed on the substrate; wherein the electrophotographically printed ink composition comprises: a first resin comprising a copolymer of an alkylene monomer and a methacrylic acid monomer; a second resin comprising a copolymer of an alkylene monomer and from about 5 wt.% to about 11 wt.% of an acrylic acid monomer; and a colorant in an amount of at least 20 wt.% of the solids of the electrophotographic ink composition.

In some examples, the printed substrate comprises a substrate and an electrophotographically printed ink composition disposed on the substrate, wherein the electrophotographically printed ink composition is as described above. In some examples, the printed substrate comprises a substrate and an electrophotographically printed ink composition disposed on the substrate, wherein the electrophotographically printed ink composition is as described above wherein the electrophotographically printed ink composition is substantially free of carrier liquid. In some examples, the printed substrate comprises a substrate and an electrophotographically printed ink composition disposed on the substrate, wherein the electrophotographically printed ink composition is as described above wherein the electrophotographically printed ink composition is free of carrier liquid.

In some examples, the electrophotographically printed ink composition forms a layer with a thickness of 1 µm or less when printed at 100% coverage, for example, 0.8 µm or less, 0.7 µm or less, 0.65 µm or less, 0.6 µm or less, 0.55 µm or less, 0.5 µm or less, 0.45 µm or less. In some examples, the electrophotogarphically printed ink composition forms a layer with a thickness of 0.4 µm to 1 µm when printed at 100% coverage, for example, 0.45 µm to 0.8 µm, 0.5 µm to 0.7 µm, 0.4 µm to 0.65 µm, 0.45 µm to 0.6 µm, 0.45 µm to 0.55 µm, 0.4 µm to 0.5 µm.

### Substrate

In some examples, the substrate may be any suitable substrate. In some examples, the substrate may be any suitable substrate capable of having an image printed thereon. The substrate may include a material selected from an organic or inorganic material. The material may include a natural polymeric material, for example, cellulose. The material may include a synthetic polymeric material, for example, a polymer formed from alkylene monomers, including, but not limited to, polyethylene, polypropylene, and co-polymers such as styrene-polybutadiene. The polypropylene may, in some examples, be biaxially oriented polypropylene. The material may include a metal, which may be in sheet form. The metal may be selected from or made from, for instance, aluminium (Al), silver (Ag), tin (Sn), copper (Cu) and mixtures thereof. In an example, the substrate includes a cellulosic paper. In an example, the cellulosic paper is coated with a polymeric material, for example, a polymer formed from styrene-butadiene resin. In some examples, the cellulosic material has an inorganic material bound to its surface (before printing with ink) with a polymeric material, wherein the inorganic material may be selected from, for example, kaolinite or calcium carbonate. In some examples, the substrate is a cellulosic substrate such as paper. In some examples, the cellulosic substrate may be a coated cellulosic substrate. In some examples, a primer may be coated onto the substrate before the electrophotographic ink composition is printed onto the substrate.

In some examples, the substrate may be a plastic film. In some examples, the substrate may be any plastic film capable of having an image printed thereon. The plastic film may include a synthetic polymeric material, for example, a polymer formed from alkylene monomers, including, for example, polyethylene and polypropylene, and co-polymers such as styrene-polybutadiene polymers. The polypropylene may, in some examples, be biaxially orientated polypropylene. In some examples, the plastic film may comprise polyethylene terephthalate.

In some examples, the plastic film is a thin film. In some examples, the plastic film comprises polyethylene (PE), linear low density polyethylene (LLDPE), low density polyethylene (LDPE), medium density polyethylene (MDPE), high density polyethylene (HDPE), polypropylene (PP), cast (cPP) or biaxially oriented polypropylene (BOPP), oriented polyamide (OPA), or polyethylene terephthalate (PET).

In some examples, the substrate comprises a plurality of layers of material laminated together to form a pre-laminated substrate. In some examples, the substrate comprises a plurality of layers of material laminated together to form a pre-laminated substrate in which a plastic film forms the surface onto which electrophotographic ink can be applied. In some examples, the substrate comprises a plurality of layers of film laminated together to form a pre-laminated substrate in which a plastic film forms the surface onto which electrophotographic ink can be applied. In an example, the substrate may be a plastic film laminated to, adhered to or coated on a cellulosic paper. In some examples, the substrate comprises a plurality of layers of material selected from polymeric materials (e.g. polymeric materials selected from PE, LLDPE, MDPE, PP, BOPP, PET and OPA), metallic materials (e.g. metallic foils such as aluminium foil, or metallized films such as met-PET, met-BOPP or any other metalized substrate), paper and combinations thereof. In some examples, the substrate comprises a plurality of layers of film of a plastic material, such as a combination of films selected from PE, LLDPE, MDPE, PP, BOPP, PET and OPA, laminated together to form the pre-laminated substrate. In some examples, the pre-laminated substrate comprises a Paper/Alu/PE, PET/AI/PE, BOPP/met-BOPP or PET/PE laminate.

In some examples, the substrate comprises a thin material, wherein the material has a thickness of 600 µm or less, for example, 250 µm or less, for example, 200 µm or less, for example, 150 µm or less, for example, 100 µm or less, for example, 90 µm or less, for example, 80 µm or less, for example, 70 µm or less, for example, 60 µm or less, for example, 50 µm or less, for example, 40 µm or less, for example, 30 µm or less, for example, 20 µm or less, for example, 15 µm or less. In some examples, the material is about 12 µm in thickness.

In some examples, the substrate comprises a thin material, wherein the material has a thickness of 12 µm or more, for example, 15 µm or more, for example, 20 µm or more, for example, 30 µm or more, for example, 40 µm or more, for example, 50 µm or more, for example, 60 µm or more, for example, 70 µm or more, for example, 80 µm or more, for example, 90 µm or more. In some examples, the material has a thickness of about 100 µm or more, in some examples, about 100 µm or more.

In some examples, the substrate comprises a thin material, wherein the material is from 12 µm to 600 µm in thickness, in some examples, from 15 µm to 250 µm in thickness, in some examples, from 20 µm to 200 µm in thickness, in some examples, from 30 µm to 150 µm in thickness, in some examples, 40 µm to 100 µm in thickness, in some examples, 50 µm to 150 µm, in some examples, 60 µm to 100 µm in thickness, in some examples, 70 to 90 µm in thickness.

### Method of Producing a Printed Substrate

In an aspect, there is provided a method of producing a printed substrate. In some examples, the method of producing a printed substrate comprises: applying a liquid electrophotographic ink composition to a substrate with an electrophotographic printer; wherein the liquid electrophotographic ink composition comprises: a first resin comprising a copolymer of an alkylene monomer and a methacrylic acid monomer; a second resin comprising a copolymer of an alkylene monomer and from about 5 wt.% to about 11 wt.% of an acrylic acid monomer; and a colorant in an amount of at least 20 wt.% of the solids of the electrophotographic ink composition.

In some examples, the method of producing a printed substrate comprises: applying a liquid electrophotographic ink composition to a substrate with an electrophotographic printer; wherein the liquid electrophotographic ink composition is as described above.

In some examples, applying a liquid electrophotographic ink composition to a substrate with an electrophotographic printer comprises contacting the liquid electrophotographic ink composition with a latent electrophotographic image on a surface to create a developed image and transferring the developed image to the substrate.

In some examples, applying a liquid electrophotographic ink composition to a substrate with an electrophotographic printer comprises contacting the liquid electrophotographic ink composition with a latent electrophotographic image on a surface to create a developed image and transferring the developed image to an intermediate transfer member and then transferring the developed image from the intermediate transfer member to the substrate.

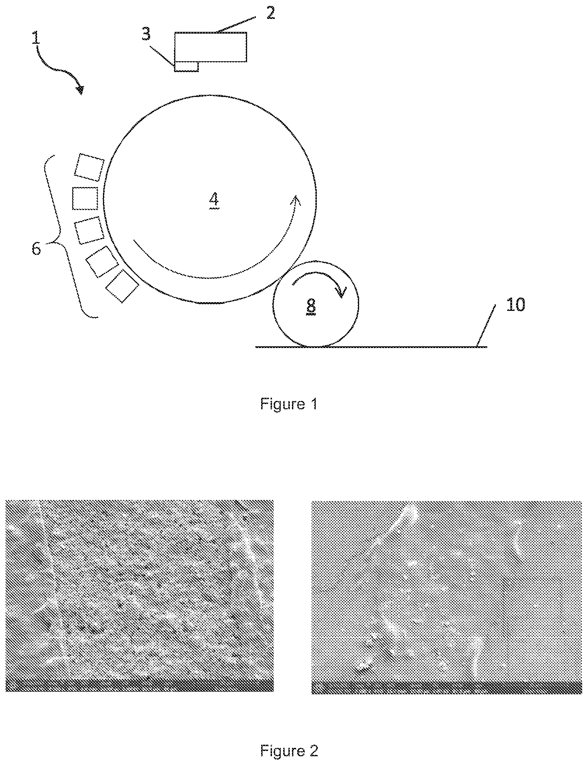

Figure 1 shows a schematic illustration of a liquid electrophotographic (LEP) printer which may be used to print a liquid electrophotographic ink composition as described herein. An image, including any combination of graphics, text and images, may be communicated to the LEP printer 1. According to an illustrative example, in order to print the electrophotographic ink composition, firstly, the photo charging unit 2 deposits a uniform static charge on the photo-imaging cylinder 4 and then a laser imaging portion 3 of the photo-charging unit 2 dissipates the static charges in selected portions of the image areas on the photo-imaging cylinder 4 to leave a latent electrophotographic image. The latent electrophotographic image, also called a latent electrostatic image, is an electrostatic charge pattern representing the image to be printed. The electrophotographic ink composition is then transferred to the photo-imaging cylinder 4 by binary ink developer (BID) units 6. The BID units 6 present a uniform film of the electrophotographic ink composition to the photo-imaging cylinder 4. A resin component of the electrophotographic ink composition may be electrically charged by virtue of an appropriate potential applied to the electrophotographic ink composition in the BID unit 6. The charged resin component is, by virtue of an appropriate potential on the electrostatic image areas, attracted to the latent electrostatic image on the photo-imaging cylinder 4. The electrophotographic ink composition does not adhere to the uncharged, non-image areas and forms an image on the surface of the latent electrostatic image. The photo-imaging cylinder 4 then has a developed electrostatic ink composition on its surface.

The image is then transferred from the photo-imaging cylinder 4 to the intermediate transfer member (ITM) 8 by virtue of an appropriate potential applied between the photo-imaging cylinder 4 and the ITM 8, such that the charged electrophotographic ink composition is attracted to the ITM 8. The image is then dried and fused on the ITM 8 before being transferred to a substrate 10. In some examples, the dried and fused image is transferred from the ITM 8 to the substrate by virtue of an appropriate potential applied between the ITM 8 and the substrate.

In some examples, this drying and fusing is achieved by using elevated temperatures and air flow assisted drying. In some examples, the ITM 8 is heatable.

In some examples, the LEP printer 1 comprises a plurality of BID units and each BID unit 6 comprises a reservoir containing a liquid electrophotographic ink composition. In some examples, each of the plurality of BID units 6 contains a different coloured liquid electrophotographic ink composition. In such examples, a multi-coloured image may be provided on a substrate 10.

A multi-coloured image disposed on the substrate may be obtained in one pass of the substrate 10 through the LEP printer 1 or in multiple passes of the substrate 10 through the LEP printer 1.

In examples in which the multi-coloured image disposed on the substrate 10 is obtained in one pass of the substrate 10 through the LEP printer 1, after forming the latent electrostatic image on the surface of the photo-imaging cylinder 4, a first coloured electrophotographic ink composition is transferred from one of the plurality of BID units 6 to the photo-imaging cylinder 4 by electrical forces to form a first coloured electrophotographic ink image on the photo-imaging cylinder 4. In this one pass method, the liquid electrophotographic ink image is then transferred from the photo-imaging cylinder 4 to the ITM 8. A second latent electrostatic image is then formed on the surface of the photo-imaging cylinder 4 and a second coloured electrophotographic ink image is then formed on the surface of the photo-imaging cylinder 4. The second coloured electrophotographic ink image is then transferred from the surface of the photo-imaging cylinder 4 to the ITM 8 to form a second coloured electrophotographic ink image disposed on the first coloured electrophotographic ink image on the ITM 8. Subsequent coloured electrophotographic ink images may then be formed on top of the first and second coloured electrophotographic ink images disposed on the ITM 8 before transfer of the coloured electrophotographic ink images from the ITM 8 to the substrate 10.

In examples in which a multi-coloured image disposed on the substrate 10 is obtained in multiple passes of the substrate 10 through the LEP printer 1, different coloured electrophotographic ink images are formed on the photo-imaging cylinder 4 as described above for the single-pass method. However, in the multi-pass method, each different coloured electrophotographic ink image is transferred from the photo-imaging cylinder 4 to the ITM 8 and then from the ITM 8 to the substrate 10 before the next coloured electrophotographic ink image is formed on the photo-imaging cylinder 4 and transferred to the substrate 10 from the photo-imaging cylinder 4 via the ITM 8. The substrate 10 undergoes additional passes through the LEP printer for each additional coloured electrophotographic ink image applied to the substrate 10.

In some examples, the LEP printer comprises a Raster Image Processor (RIP). In some examples, the RIP is configured to communicate with the laser imaging portion 3 and/or the BID units 6 to define which coloured electrophotographic ink composition available for printing should be sent to which location on the photo-imaging cylinder 4 in order to produce a pre-determined multi-coloured image on the substrate 10.

### Method of Producing a Liquid Electrophotographic ink Composition

Also provided is a method of producing an electrophotographic ink composition. The method comprises combining a carrier liquid, a first resin and a second resin.

In some examples, the method may comprise suspending a first resin and a second resin in a carrier liquid. In some examples, the electrophotographic ink comprises chargeable particles comprising a first resin and a second resin. In some examples, the method may comprise suspending chargeable particles comprising a first resin and a second resin in a carrier liquid.

In some examples, the method may comprise dispersing a first resin and a second resin in a carrier liquid. In some examples, the method may comprise dispersing chargeable particles comprising a first and second resin in a carrier liquid.

In some examples, the method comprises combining a resin (for example, the first resin) with the carrier liquid and subsequently adding the other resin (for example, the second resin). In some examples, the method comprises combining a resin (for example, the first resin) with the carrier liquid to form a paste and subsequently adding the other resin (for example, the second resin). In some examples, the resin and the carrier liquid are combined and heated to an elevated temperature before adding the other resin, which may have also been heated to an elevated temperature. In some examples, the resin and the carrier liquid are combined and heated to a temperature above the melting point of the resin before adding the other resin, which may have also been heated to a temperature above its melting point. In some examples, the resin and carrier liquid are combined and heated until the resin has melted and/or dissolved in the carrier liquid before adding the other resin. In some examples, adding the other resin to the combined resin and carrier liquid comprises mixing the other resin with the combined resin and carrier liquid.

The melting point of the resin may be determined by differential scanning calorimetry, for example, using ASTM D3418.

In some examples, the resin and the carrier liquid are combined and heated to a temperature of at least 70°C, for example, at least 80°C, for example, at least 90°C, for example, at least 100°C, for example, at least 110°C, for example, at least 120°C, for example, 130°C, for example, to melt the resin. In some examples, the other resin is heated before being added to the combined resin and carrier liquid. In some examples, the other resin is heated to at least 30°C, in some examples, at least 40°C, in some examples, at least 45°C, in some examples, at least 50°C before being added to the combined resin and carrier liquid. In some examples, the other resin is heated to 100°C or less, in some examples, 90°C or less, in some examples, 80°C or less, in some examples, 75°C or less, in some examples, 70°C or less, in some examples, 60°C or less before being added to the combined resin and carrier liquid. In some examples, the other resin is heated to reduce the viscosity of the other resin before being added to the first resin and the carrier liquid.

In some examples, the method comprises combining the first resin with the carrier liquid to form a first composition; combining the second resin with the carrier liquid to form a second composition; and subsequently combining the first composition and the second composition to form an electrophotographic ink composition. In some examples, the method comprises combining the first resin with the carrier liquid to form a first paste; combining the second resin with the carrier liquid to form a second paste; and subsequently combining the first paste and the second paste to form an electrophotographic ink composition. In some examples, the first resin and the carrier liquid are combined and heated to an elevated temperature to form a first heated composition; the second resin and the carrier liquid are combined and heated to an elevated temperature to form a second heated composition; and subsequently the first heated composition and the second heated composition are combined. In some examples, the first resin and the carrier liquid are combined and heated to a temperature above the melting point of the first resin to form a first heated composition; the second resin and the carrier liquid are combined and heated to a temperature above the melting point of the second resin to form a second heated composition; and subsequently the first heated composition and the second heated composition are combined. In some examples, the first composition and the second composition are heated to the same temperature, which may be a temperature above the melting temperature of all of the resins.

In some examples, the method comprises mixing the first resin and the second resin together and then combining the mixture of the resins with the carrier liquid.

In some examples, the first resin and the second resin are combined with the carrier liquid and subsequently heated to an elevated temperature. In some examples, the first resin and the second resin are combined with the carrier liquid and subsequently heated to a temperature above the melting point of at least one, optionally all, of the resins. In some examples, the first resin and the second resin are combined with the carrier liquid and subsequently heated to a temperature of at least 70°C, for example, at least 80°C, for example, at least 90°C, for example, at least 100°C, for example, at least 110°C, for example, at least 120°C, for example, 130°C, for example, to melt at least one, optionally all, of the resins. In some examples, the combined first resin, second resin and carrier liquid are heated until all of the resins have melted and/or dissolved in the carrier liquid.

In some examples, the method of producing an electrophotographic ink composition comprises combining a first resin, a second resin, and a carrier liquid.

In some examples, the chargeable particles comprise the first resin and the second resin.

Melting and/or dissolving a resin (or resins) in the carrier liquid may result in the carrier fluid appearing clear and homogeneous. In some examples, the resin (or resins) and carrier liquid are heated before, during or after mixing.

In some examples, the resin (or resins) and the carrier liquid are mixed at a mixing rate of 500 rpm or less, for example, 400 rpm or less, for example, 300 rpm or less, for example, 200 rpm or less, for example, 100 rpm or less, for example, 75 rpm or less, for example, 50 rpm. In some examples, mixing may continue until melting and/or dissolution of the resin (or resins) in the carrier liquid is complete.

In some examples, after combining and heating the resins and the carrier liquid, the mixture is cooled to a temperature below the melting point of the resins, for example, to room temperature. In some examples, the chargeable particles are removed from the carrier liquid and re-dispersed in a new portion of carrier liquid, which may be the same or a different carrier liquid.

In some examples, the method comprises adding a colorant to the combined first resin, second resin and carrier liquid. In some examples, the method comprises adding a colorant to the combined first resin, second resin and carrier liquid to form chargeable particles comprising the resins and a colorant. In some examples, the method comprises grinding the colorant and the resins in the presence of the carrier liquid to form a paste. In some examples, the method comprises heating and mixing the colorant and the resins in the presence of the carrier liquid to form a paste.

In some examples, the method comprises adding a charge adjuvant to the combined first resin, second resin and carrier liquid and optionally grinding. In some examples, the method comprises adding a charge adjuvant and a colorant to the combined first resin, second resin and carrier liquid and optionally grinding. In some examples, the method comprises adding a charge adjuvant to the combined first resin, second resin, colorant and carrier liquid and optionally grinding.

In some examples, the method comprises grinding at a grinding speed of at least 50 rpm. In some examples, the method comprises grinding at a grinding speed of up to about 600 rpm. In some examples, the method comprises grinding for at least 1 h, in some examples, for at least 2 h. In some examples, the method comprises grinding for up to about 12 h. In some examples, the method comprises grinding at a temperature of at least about 30°C, for example, at least about 35°C, for example, at least about 40°C, for example, at least about 50°C. In some examples, the method comprises grinding at a temperature of at least about 50°C for a first time period, in some examples, for at least 1 h, in some examples, for at least 1.5 h and then reducing the temperature to a temperature of at least 30°C, in some examples, at least 35°C and continuing grinding for at least 5 h, in some examples, at least 9 h, in some examples, at least 10 h.

In some examples, the method comprises adding a charge director to the combined first resin, second resin and carrier liquid. In some examples, the method comprises adding a charge director to the combined first resin, second resin, colorant and carrier liquid. In some examples, the method comprises adding a charge director to the combined first resin, second resin, charge adjuvant and carrier liquid. In some examples, the method comprises adding a charge director to the combined first resin, second resin, colorant, charge adjuvant and carrier liquid.

### Examples

The following illustrates examples of the methods and other aspects described herein. Thus, these Examples should not be considered as limitations of the present disclosure, but are merely in place to teach how to make examples of the present disclosure.

### Materials

### Resins

Nucrel^{™} 699: a copolymer of ethylene and methacrylic acid, with nominally 11 wt.% methacrylic acid; available from DuPont^{™}.

A-C^{™} 580: a copolymer of ethylene and acrylic acid, with an acrylic acid content of 10 wt.%; available from Honeywell^{™}.

A-C^{™} 5120: a copolymer of ethylene and acrylic acid, with an acrylic acid content of 15 wt.%; available from Honeywell^{™}.

### Pigment

TB5 (cyan main pigment): a pigment 15:3 with a density of 1.5 available from TOYO.

FB78 (cyan secondary pigment): a pigment 15:3 with a density of 1.6 available from BASF.

### Carrier Liquid

Isopar L^{™}: an isoparaffinic oil comprising a mixture of C11-C13 isoalkanes; produced by Exxon Mobil^{™}; CAS number 64742-48-9.

### Charge Adjuvant

VCA: an aluminium stearate; available from Fischer Scientific.

### Charge Director

NCD (natural charge director): KT (natural soya lecithin in phospholipids and fatty acids), BBP (basic barium petronate, i.e., a barium sulfonate salt of a 21-26 carbon hydrocarbon alkyl, available from Cemtura^{™}), and GT (dodecyl benzene sulfonic acid isopropyl amine, supplied by Croda^{™}). The composition being 6.6 wt.% KT, 9.8 wt.% BBP and 3.6 wt.% GT and balance (80 wt.%) Isopar L^{™}.

### General Procedure

A transparent paste (40 wt.% non-volatile solids (NVS)) was formed by combining a first resin, a second resin (see Table 1 for the ratio) and Isopar^{®} L in a Ross reactor (Model DPM-2, obtained from Charles Ross & Son Company-Hauppauge NY) at 130°C and a mixing rate of 50 rpm for 1 h. The mixing rate was then increased to 70 rpm and mixing was continued at 130°C for a further 1.5 h. The temperature was then gradually reduced to 25°C over at least 2.5 h under continued mixing at 70 rpm to form the transparent paste.

The transparent paste was then diluted with further Isopar^{®} L and ground with a pigment (see Table 1 for amounts; a ratio of 1:12 of main pigment to secondary pigment was used) for 12 h in the presence of VCA (1.2 wt.% of total solids) in an SS attritor at 58°C and 250 rpm for 1 h, and then at 36°C and 250 rpm for 10.5 h forming a liquid electrophotographic ink composition.

Before printing, the liquid electrophotographic ink composition was then diluted to 2 wt.% solids. A charge director (NCD) was then added in an amount of 10 to 100 mg/g of solids on the printing press.

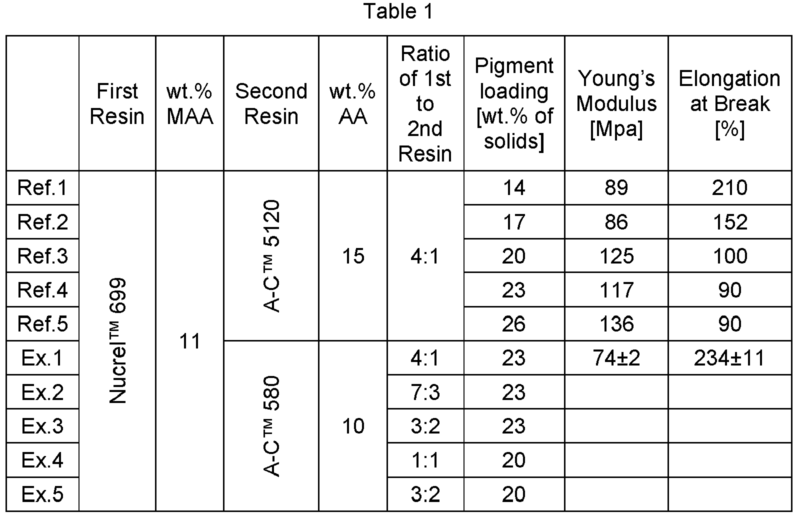

The Young's Modulus and Elongation at Break results for Ex.3 (at a ratio of 3:2) were found to be similar to those of Ex.1 (at a ratio of 4:1).

### Young's Modulus

The liquid electrophotographic ink composition was dried at 45°C in an oven over a few days. A dog bone shaped piece of the dried ink composition was prepared in a Mini-Jet instrument. The Young's modulus of each ink composition was then measured using an INSTRON 3365 machine and following the procedure of ASTM D638.

An increase in Young's Modulus was found to reduce conformability of printed ink compositions, resulting in increased retention of the ink composition on the ITM blanket and therefore reduced print quality. As can be seen from the data in Table 1, the Young's Modulus of the reference ink compositions (containing Nucrel^{™} 699 and A-C^{™} 5120) increased with increasing pigment loading. At higher pigment loading, the ratio of resin to pigment is changed. This increases the Young's Modulus, causing the printed images to become tougher and less flexible. The increased toughness and reduced flexibility results in poor contact between the printed image and the substrate (reducing the conformability to the substrate). The present inventors surprisingly found that for a liquid electrophotographic ink composition comprising a combination of a copolymer of ethylene and methacrylic acid (the first resin) with a copolymer of ethylene and from about 5 wt.% to about 11 wt.%, in particular, 10 wt.% of an acrylic acid monomer (the second resin), the Young's Modulus was reduced even at higher pigment loadings when compared to the reference ink compositions. Thus, the new resin returns the mechanical properties to the level of the Reference 1 ink composition (i.e., at 14 wt.% pigment loading). Indeed, the Young's Modulus of the Example 4 liquid electrophotographic ink composition (at 23 wt.% pigment loading) was below that of the Reference 1 liquid electrophotographic ink composition (at 14 wt.% pigment loading).

### Elongation at Break

The liquid electrophotographic ink composition was dried at 45°C in an oven over a few days. Then dog bone shaped pieces were prepared from the dried ink in the Mini-Jet instrument. The percentage elongation at break of each ink composition was then measured using an INSTRON 3365 machine and following the procedure of ASTM D638.

A reduction in the percentage elongation at break has been shown to reduce printed film cohesion, resulting in increased retention of the ink composition on the ITM blanket and therefore reduced print quality. As can be seen from the data in Table 1, the elongation at break of the reference ink compositions (containing Nucrel^{™} 699 and A-C^{™} 5120) decreased with increasing pigment loading. The increased pigment loading increases the brittleness of the ink composition, reducing film cohesion and lowering the percentage elongation at break The present inventors surprisingly found that for a liquid electrophotographic ink composition comprising a combination of a copolymer of ethylene and methacrylic acid (the first resin) with a copolymer of ethylene and from about 5 wt.% to about 11 wt.%, in particular, 10 wt.% of an acrylic acid monomer (the second resin), the elongation at break was increased even at higher pigment loadings when compared to the reference ink compositions. Thus, the new resin returns the mechanical properties at higher pigment loadings to the level of the Reference 1 ink composition (at 14 wt.% pigment loading). Indeed, the Elongation at Break of the Example 4 liquid electrophotographic ink composition (at 23 wt.% pigment loading) was above that of the Reference 1 liquid electrophotographic ink composition (at 14 wt.% pigment loading).

### Transferability Tests

Printed substrates were prepared by liquid electrophotographically printing the liquid electrophotographic ink compositions on paper using an HP Indigo 7600 printing press in 4 shot mode. Transferability tests were performed by printing onto Condat coated paper and Soperset uncoated paper.

The ability of the electrophotographic ink composition to transfer from the intermediate transfer member (blanket) to the substrate was tested by comparing the performance of the new ink compositions (Ex.1 to Ex.6) with that of Reference 1 (Cyan HP ElectroInk^{™} 4.5). All ink compositions were printed at 30% grey. A new blanket was installed in the printing press (HP Indigo 7600) and the blanket's ability to release ink was uniformly deteriorated by printing 2000 to 4000 impressions of a job in which the 1^{st} 3 separations run without fluids (BID bypassed) and the following 2 print a non-test ink (Ref.1; in regular squares of ink in a grid pattern). The blanket is then cleaned, and the transfer assessment test begins: vertical bars of both test (Ex.1 to Ex.6 and Ref.2 to Ref.5) and reference inks (Ref.1) are printed on a substrate with low affinity for ElectroInk^{™} 4.5 (a "bad" substrate) in sub-optimal conditions, followed by a cleaner page. The level of the signal can be fine-tuned by changing the size of the nip between the intermediate transfer roller and the impression cylinder (also called the T2 gap). This print job is immediately followed by a solid yellow page (yellow ElectroInk^{™} 4.5) printed on a good substrate under optimal conditions, which completely cleans all ink remnants from the blanket. Any cyan ink (Ref.1) or test ink (Ex.1 to Ex.6 and Ref.2 to Ref.5) that was not transferred to the "bad" substrate is visible as contamination (darker portions) on the yellow printed pages.

Additionally, SEM images of printed pages and of the ITM blanket were taken in order to directly observe the contamination of the blanket and damage to the printed images. Figure 2 shows SEM images of the Ref.4 ink composition (at 23 wt.% pigment loading printed on Condat coated paper. SEM images of Ex.1 to Ex.6 ink compositions showed less contamination of the blanket and less damage to the printed images. SEM images of the Ref.2 to Ref.5 ink compositions showed more contamination of the blanket and more damage to the printed images than the Ref.1 ink composition.

The transferability of the Reference liquid electrophotographic ink compositions reduced with increasing pigment loadings. Thus, the Ref.1 ink composition transferred from the ITM blanket to the substrate better than the Ref.2 ink composition.

The Ex.1 ink composition (a 4:1 ratio of Nucrel^{™} 699 to A-C^{™} 580 at 23 wt.% pigment loading) showed better transferability to the substrate than the Ref.4 ink composition (at 23 wt.% pigment loading).

The Ex.2 ink composition (a 7:3 ratio of Nucrel^{™} 699 to A-C^{™} 580 at 23 wt.% pigment loading) showed better transferability to the substrate from the ITM blanket (the T2 transfer) than the Ref.1 ink composition (at 14 wt.% pigment loading). Furthermore, the durability (rub resistance and scratching with a fingernail) of the Ex.2 ink composition (a 7:3 ratio of Nucrel^{™} 699 to A-C^{™} 580 at 23 wt.% pigment loading) was comparable to that of the Ref.1 ink composition (at 14 wt.% pigment loading).

The Ex.3 ink composition (a 3:2 ratio of Nucrel^{™} 699 to A-C^{™} 580 at 23 wt.% pigment loading) showed better transferability to the substrate from the ITM blanket (the T2 transfer) than the Ref.1 ink composition (at 14 wt.% pigment loading). The Ex.3 ink composition (a 3:2 ratio of Nucrel^{™} 699 to A-C^{™} 580) also showed better transferability to the substrate from the ITM blanket than the Ex.2 ink composition (a 7:3 ratio of Nucrel^{™} 699 to A-C^{™} 580). Furthermore, the durability of the Ex.3 ink composition was comparable to that of the Ref.1 ink composition.

The Ex.4 ink composition (a 1:1 ratio of Nucrel^{™} 699 to A-C^{™} 580 at 20 wt.% pigment loading) showed better transferability to the substrate from the ITM blanket (the T2 transfer) than the Ref.1 ink composition (at 14 wt.% pigment loading). The Ex.4 ink composition also showed better transferability to the substrate from the ITM blanket than the Ex.5 ink composition (a 3:2 ratio of Nucrel^{™} 699 to A-C^{™} 580 at 20 wt.% pigment loading). However, the Ex.4 ink composition was found to be less durable (rub resistance and scratching with a fingernail) than the Ref.1 ink composition but still provided acceptable durability.

The Ex.5 ink composition (a 3:2 ratio of Nucrel^{™} 699 to A-C^{™} 580 at 20 wt.% pigment loading) showed better transferability to the substrate from the ITM blanket (the T2 transfer) than the Ref.1 ink composition. Furthermore, the durability of the Ex.5 ink composition was comparable to that of the Ref.1 ink composition.

### Particle Conductivity

The charging of the Ref.4 and Ex.1 to Ex.3 ink compositions (all at 23 wt.% pigment loading) was studied using NCD as the charge director. The particle conductivity (PC) was calculated by subtracting the low field conductivity (LF) from the high filed conductivity (HF), where LF was measured using an LF probe and HF was measured by a Q/M device that measures electrophoretic conductivity at high field (PC=HR-LF; measured in pmho).

The low field conductivity is the electrical conductivity of the in composition measured under the following conditions:
- Electrical field amplitude: 5-15 V/mm;
- Frequency: 5-15 Hz;
- Temperature: 23±2°C.

The high field conductivity is the maximum electrical conductivity of the ink measured under the following conditions:
- Electrical field pulse:
   - Shape: rectangular;
   - Height: 1500 V/mm;
   - Duration: 8 s;
   - Rise time: 1 ms or less;
   - Ripple: 10 V/mm or less;
- Sampling frequency: 1000 per second;
- Temperature: 23±2°C.

The particle conductivity was measured at different charge director (NCD) concentrations and the results are shown in Figure 2.

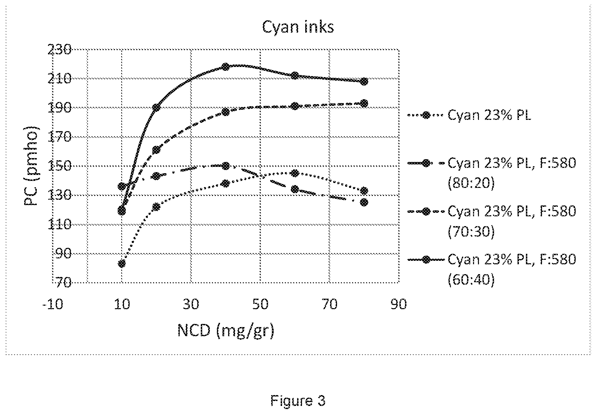

As can be seen from Figure 3, increasing the concentration of A-C^{™} 580 in the resin mixture increases the particle conductivity for compositions with the same amount of charge director (NCD). Without wishing to be bound by theory, it is believed that the increased particle conductivity may be due to the lower acidity of the second resin in the new formulations. Furthermore, the particle conductivity of ink compositions containing a 7:3 or 3:2 ratio of Nucrel^{™} 699 to A-C^{™} 580 show significantly higher particle conductivity than the Reference ink (Ref.4) at amounts of charge director (NCD) above 10 mg/g.

## Claims

1. A liquid electrophotographic ink composition comprising:
a first resin comprising a copolymer of
an alkylene monomer and
a methacrylic acid monomer;
a second resin comprising a copolymer of
an alkylene monomer and
from about 5 wt.% to 11 wt.% of an acrylic acid monomer and
a colorant in an amount of at least 20 wt.% of the solids of the electrophotographic ink composition.

2. The liquid electrophotographic ink composition according to claim 1 comprising the colorant in an amount of 35 wt.% or less of the solids of the electrophotographic ink composition.

3. The liquid electrophotographic ink composition according to claim 1, wherein the amount of methacrylic acid in the copolymer of an alkylene monomer and a methacrylic acid monomer is within 2 wt.% of the amount of acrylic acid in the copolymer of an alkylene monomer and an acrylic acid monomer.

4. The liquid electrophotographic ink composition according to claim 1, wherein the copolymer of an alkylene monomer and a methacrylic acid monomer is a copolymer of an alkylene monomer and from 5 wt.% to 15 wt.% of a methacrylic acid monomer.

5. The liquid electrophotographic ink composition according to claim 1, wherein the copolymer of an alkylene monomer and from about 5 wt.% to 11 wt.% of an acrylic acid monomer is a copolymer of an alkylene monomer and from 8 wt.% to 11 wt.% of an acrylic acid monomer.

6. The liquid electrophotographic ink composition according to claim 1, wherein an alkylene monomer is a monomer selected from ethylene and propylene.

7. The liquid electrophotographic ink composition according to claim 1, wherein the copolymer of an alkylene monomer and a methacrylic acid monomer is a copolymer of ethylene and a methacrylic acid monomer and the copolymer of an alkylene monomer and an acrylic acid monomer is a copolymer of ethylene and an acrylic acid monomer.

8. The liquid electrophotographic ink composition according to claim 1, wherein the copolymer of an alkylene monomer and methacrylic acid is a copolymer of an alkylene monomer and from 8 wt.% to 12 wt.% methacrylic acid and wherein the copolymer of an alkylene monomer and from 5 wt.% to 11 wt.% acrylic acid is a copolymer of an alkylene monomer and from 8 to 11 wt.% acrylic acid.

9. The liquid electrophotographic ink composition according to claim 1, wherein the colorant is selected from cyan colorants, magenta colorants and yellow colorants.

10. The liquid electrophotographic ink composition according to claim 1, wherein the ratio of the first resin to the second resin is from 75:35 to 50:50.

11. The liquid electrophotographic ink composition according to claim 1, wherein the ratio of the first resin to the second resin is from 65: 35 to 50:50.

12. A printed substrate comprising:
a substrate; and
an electrophotographically printed ink composition disposed on the substrate;
wherein the electrophotographically printed ink composition comprises:
a first resin comprising a copolymer of
an alkylene monomer and
a methacrylic acid monomer;
a second resin comprising a copolymer of
an alkylene monomer and
from 5 wt.% to 11 wt.% of an acrylic acid monomer and
a colorant in an amount of at least 20 wt.% of the solids of the electrophotographic ink composition.

13. The printed substrate according to claim 12, wherein the electrophotographically printed ink composition disposed on the substrate has a thickness of 0.8 µm or less when printed at 100% coverage.

14. The printed substrate according to claim 12, wherein the copolymer of an alkylene monomer and a methacrylic acid monomer is a copolymer of an alkylene monomer and from 5 wt.% to 15 wt.% methacrylic acid monomer.

15. A method of producing a printed substrate comprising:
applying a liquid electrophotographic ink composition to a substrate with an electrophotographic printer;
wherein the liquid electrophotographic ink composition comprises:
a first resin comprising a copolymer of
an alkylene monomer and
a methacrylic acid monomer;
a second resin comprising a copolymer of
an alkylene monomer and
from 5 wt.% to 11 wt.% of an acrylic acid monomer and
a colorant in an amount of at least 20 wt.% of the solids of the electrophotographic ink composition.

## Patentansprüche

1. Flüssig-Elektrofotografietintenzusammensetzung, die umfasst:
ein erstes Harz, das ein Copolymer umfasst aus
einem Alkylenmonomer und
einem Methacrylsäuremonomer;
ein zweites Harz, das ein Copolymer umfasst aus
einem Alkylenmonomer und
von 5 Gew.-% bis 11 Gew.-% ein Acrylsäuremonomer
und
ein Farbmittel in einer Menge von mindestens 20 Gew.-% der Feststoffe der Elektrofotografietintenzusammensetzung.

2. Flüssig-Elektrofotografietintenzusammensetzung nach Anspruch 1, die das Farbmittel in einer Menge von 35 Gew.-% oder weniger der Feststoffe der Elektrofotografietintenzusammensetzung umfasst.

3. Flüssig-Elektrofotografietintenzusammensetzung nach Anspruch 1, wobei die Menge von Methacrylsäure in dem Copolymer eines Alkylenmonomers und eines Methacrylsäuremonomers innerhalb von 2 Gew.-% der Menge von Acrylsäure in dem Copolymer eines Alkylenmonomers und eines Acrylsäuremonomers liegt.

4. Flüssig-Elektrofotografietintenzusammensetzung nach Anspruch 1, wobei
das Copolymer eines Alkylenmonomers und eines Methacrylsäuremonomers ein Copolymer eines Alkylenmonomers und von 5 Gew.-% bis 15 Gew.-% eines Methacrylsäuremonomers ist.

5. Flüssig-Elektrofotografietintenzusammensetzung nach Anspruch 1, wobei
das Copolymer eines Alkylenmonomers und von 5 Gew.-% bis 11 Gew.-% eines Acrylsäuremonomers ein Copolymer eines Alkylenmonomers und von 8 Gew.-% bis 11 Gew.-% eines Acrylsäuremonomers ist.

6. Flüssig-Elektrofotografietintenzusammensetzung nach Anspruch 1, wobei
ein Alkylenmonomer ein Monomer ist, das aus Ethylen und Propylen ausgewählt ist.

7. Flüssig-Elektrofotografietintenzusammensetzung nach Anspruch 1, wobei
das Copolymer eines Alkylenmonomers und eines Methacrylsäuremonomers ein Copolymer aus Ethylen und eines Methacrylsäuremonomers ist und das Copolymer eines Alkylenmonomers und eines Acrylsäuremonomers ein Copolymer aus Ethylen und eines Acrylsäuremonomers ist.

8. Flüssig-Elektrofotografietintenzusammensetzung nach Anspruch 1, wobei
das Copolymer eines Alkylenmonomers und Methacrylsäure ein Copolymer eines Alkylenmonomers und von 8 Gew.-% bis 12 Gew.-% Methacrylsäure ist und wobei das Copolymer eines Alkylenmonomers und von 5 Gew.-% bis 11 Gew.-% Acrylsäure ein Copolymer eines Alkylenmonomers und von 8 bis 11 Gew.-% Acrylsäure ist.

9. Flüssig-Elektrofotografietintenzusammensetzung nach Anspruch 1, wobei
das Farbmittel ausgewählt ist aus Cyan-Farbmitteln, Magenta-Farbmitteln und Gelb-Farbmitteln.

10. Flüssig-Elektrofotografietintenzusammensetzung nach Anspruch 1, wobei
das Verhältnis des ersten Harzes zu dem zweiten Harz von 75 : 35 bis 50 : 50 beträgt.

11. Flüssig-Elektrofotografietintenzusammensetzung nach Anspruch 1, wobei
das Verhältnis des ersten Harzes zu dem zweiten Harz von 65 : 35 bis 50 : 50 beträgt.

12. Bedrucktes Substrat, das umfasst:
ein Substrat; und
eine elektrofotografisch gedruckte Tintenzusammensetzung, die auf dem Substrat angeordnet ist;
wobei die elektrofotografisch gedruckte Tintenzusammensetzung umfasst:
ein erstes Harz, das ein Copolymer umfasst aus
einem Alkylenmonomer und
einem Methacrylsäuremonomer;
ein zweites Harz, das ein Copolymer umfasst aus
einem Alkylenmonomer und
zu 5 Gew.-% bis 11 Gew.-% ein Acrylsäuremonomer
und
ein Farbmittel in einer Menge von mindestens 20 Gew.-% der Feststoffe der Elektrofotografietintenzusammensetzung.

13. Bedrucktes Substrat nach Anspruch 12, wobei die auf dem Substrat angeordnete elektrofotografisch gedruckte Tintenzusammensetzung eine Dicke von 0,8 µm oder weniger aufweist, wenn sie bei 100 % Deckung gedruckt wird.

14. Bedrucktes Substrat nach Anspruch 12, wobei das Copolymer eines Alkylenmonomers und eines Methacrylsäuremonomers ein Copolymer eines Alkylenmonomers und von 5 Gew.-% bis 15 Gew.-% Methacrylsäuremonomer ist.

15. Verfahren zum Herstellen eines gedruckten Substrats, das umfasst:
Aufbringen einer Flüssig-Elektrofotografietintenzusammensetzung auf ein Substrat mit einem Elektrofotografiedrucker;
wobei die Flüssig-Elektrofotografietintenzusammensetzung umfasst:
ein erstes Harz, das ein Copolymer umfasst aus einem Alkylenmonomer und
einem Methacrylsäuremonomer;
ein zweites Harz, das ein Copolymer umfasst aus einem Alkylenmonomer und
zu 5 Gew.-% bis 11 Gew.-% ein Acrylsäuremonomer
und
ein Farbmittel in einer Menge von mindestens 20 Gew.-% der Feststoffe der Elektrofotografietintenzusammensetzung.

## Revendications

1. Composition d'encre électrophotographique liquide, comprenant :
une première résine comprenant un copolymère de un monomère alkylène et
un monomère acide méthacrylique ;
une seconde résine comprenant un copolymère de un monomère alkylène et
de 5 % en poids à 11 % en poids d'un monomère acide acrylique
et
un colorant en une quantité d'au moins 20 % en poids des matières solides de la composition d'encre électrophotographique.

2. Composition d'encre électrophotographique liquide selon la revendication 1 comprenant le colorant en une quantité de 35 % en poids ou moins des matières solides de la composition d'encre électrophotographique.

3. Composition d'encre électrophotographique liquide selon la revendication 1, dans laquelle la quantité d'acide méthacrylique dans le copolymère d'un monomère alkylène et
d'un monomère acide méthacrylique est à plus ou moins 2 % en poids de la quantité d'acide acrylique dans le copolymère d'un monomère alkylène et d'un monomère acide acrylique.

4. Composition d'encre électrophotographique liquide selon la revendication 1, dans laquelle
le copolymère d'un monomère alkylène et d'un monomère acide méthacrylique est un copolymère d'un monomère alkylène et de 5 % en poids à 15 % en poids d'un monomère acide méthacrylique.

5. Composition d'encre électrophotographique liquide selon la revendication 1, dans laquelle
le copolymère d'un monomère alkylène et de 5 % en poids à 11 % en poids d'un monomère acide acrylique est un copolymère d'un monomère alkylène et de 8 % en poids à 11 % en poids d'un monomère acide acrylique.

6. Composition d'encre électrophotographique liquide selon la revendication 1, dans laquelle
un monomère alkylène est un monomère choisi parmi éthylène et propylène.

7. Composition d'encre électrophotographique liquide selon la revendication 1, dans laquelle
le copolymère d'un monomère alkylène et d'un monomère acide méthacrylique est un copolymère d'éthylène et d'un monomère acide méthacrylique et le copolymère
d'un monomère alkylène et d'un monomère acide acrylique est un copolymère d'éthylène et d'un monomère acide acrylique.

8. Composition d'encre électrophotographique liquide selon la revendication 1, dans laquelle
le copolymère d'un monomère alkylène et d'acide méthacrylique est un copolymère
d'un monomère alkylène et de 8 % en poids à 12 % en poids d'acide méthacrylique et dans laquelle le copolymère d'un monomère alkylène et de 5 % en poids à 11 % en poids d'acide acrylique est un copolymère d'un monomère alkylène et de 8 à 11 % en poids d'acide acrylique.

9. Composition d'encre électrophotographique liquide selon la revendication 1, dans laquelle
le colorant est choisi parmi colorants cyan, colorants magenta et colorants jaunes.

10. Composition d'encre électrophotographique liquide selon la revendication 1, dans laquelle
le rapport de la première résine à la seconde résine va de 75:35 à 50:50.

11. Composition d'encre électrophotographique liquide selon la revendication 1, dans laquelle
le rapport de la première résine à la seconde résine va de 65: 35 à 50:50.

12. Substrat imprimé comprenant :
un substrat ; et
une composition d'encre imprimée de manière électrophotographique disposée sur le substrat ;
la composition d'encre imprimée de manière électrophotographique comprenant :
une première résine comprenant un copolymère de un monomère alkylène et
un monomère acide méthacrylique ;
une seconde résine comprenant un copolymère de un monomère alkylène et
de 5 % en poids à 11 % en poids d'un monomère acide acrylique
et
un colorant en une quantité d'au moins 20 % en poids des matières solides de la composition d'encre électrophotographique.

13. Substrat imprimé selon la revendication 12, dans lequel la composition d'encre imprimée de manière électrophotographique disposée sur le substrat a une épaisseur de 0,8 µm ou moins lors d'une impression à 100 % de couverture.

14. Substrat imprimé selon la revendication 12, dans lequel le copolymère d'un monomère alkylène et d'un monomère acide méthacrylique est un copolymère d'un monomère alkylène et de 5 % en poids à 15 % en poids de monomère acide méthacrylique.

15. Procédé de production d'un substrat imprimé comprenant :
l'application d'une composition d'encre électrophotographique liquide sur un substrat avec une imprimante électrophotographique ;
la composition d'encre électrophotographique liquide comprenant :
une première résine comprenant un copolymère de un monomère alkylène et
un monomère acide méthacrylique ;
une seconde résine comprenant un copolymère de un monomère alkylène et
de 5 % en poids à 11 % en poids d'un monomère acide acrylique
et
un colorant en une quantité d'au moins 20 % en poids des matières solides de la composition d'encre électrophotographique.
